Europäisches Patentamt

European Patent Office

Office européen des brevets

(19)

(11) Numéro de publication: **0 316 282**
**A1**

## (12) DEMANDE DE BREVET EUROPEEN

(21) Numéro de dépôt: **88810771.1**

(22) Date de dépôt: **09.11.88**

(51) Int. Cl.⁴: **C 08 K 3/30**
C 08 L 91/06, C 08 L 23/02,
C 08 L 101/00

(30) Priorité: **11.11.87 CH 4395/87**

(43) Date de publication de la demande:
**17.05.89 Bulletin 89/20**

(84) Etats contractants désignés:
**AT BE CH DE ES FR GB GR IT LI LU NL SE**

(71) Demandeur: **MONTRES ROLEX SA**
**3, Rue François-Dussaud**
**CH-1211 Genève 24 (CH)**

(72) Inventeur: **Matthey, Pierre**
**4, Rue Tour de Boel**
**CH-1204 Genève (CH)**

**Rossel, Alain**
**Chemin du Foulon 15**
**CH-1258 Perly (CH)**

(74) Mandataire: **Dousse, Blasco et al**
**7, route de Drize**
**CH-1227 Carouge/Genève (CH)**

(54) **Composition thermoformable pour le moulage d'objets sensibles à la chaleur.**

(57) Composition moulable par thermoinjection à des températures de l'ordre de 120°C. Cette composition contient une résine polyalcoylénique, un plastifiant permettant d'abaisser sensiblement sa température de fusion et un pigment minéral, de préférence autoluminescent. Application au formage par microinjection de signes limineux utilisables en horlogerie.

EP 0 316 282 A1

Bundesdruckerei Berlin

**Description**

## COMPOSITION THERMOFORMABLE POUR LE MOULAGE D'OBJETS SENSIBLES A LA CHALEUR

La présente invention a pour objet une composition de résine thermoformable, de préférence par injection, à base d'une résine polyalcoylénique, de préférence le polyéthylène et d'un plastifiant paraffinique. Cette composition contient un pigment minéral, de préférence phosphorescent et, de ce fait, peut servir à la fabrication, par moulage, d'objets pouvant être vus dans l'obscurité, notamment des signes luminescents.

On sait qu'on peut incorporer de la paraffine au polyéthylène en vue de le fluidiser et de permettre son moulage par injections à des températures plus basses que celles exigées par le polyéthylène seul.

Ainsi, le document GB-A-1,246,222 (SUN OIL COMPANY) propose de mélanger un matériau "porteur", (tel qu'une paraffine, un hydrocarbure, une cire synthétique, etc...) chauffé à une température suffisante pour le maintenir en fusion, avec des particules d'une résine thermoplastique difficile à thermoformer seule, de mouler ce mélange à consistance semi-liquide, de le chauffer ensuite suffisamment pour liquéfier complètement les fragments de résine thermoplastique et, finalement, de refroidir l'objet moulé.

Ce document indique que le procédé proposé convient particulièrement bien pour le thermo-formage de résines telles que polypropylène, polystyrène, polyesters, polyamides, etc... et, notamment, le polyéthylène d'un poids moléculaire de 500.000 à 3.000.000, les proportions de paraffine variant entre environ 1 à 75% au poids par rapport à la résine. La viscosité de la paraffine liquide utilisée est inférieure au 1/10 de celle de la résine à la même température et, de préférence, de l'ordre de 1/100 de cette valeur. Comme valeurs de la viscosité, on cite des chiffres de 40 et 84 unités SUS à 210° F (90°C) (60 unités SUS correspondent à 10 centistokes), c'est-à-dire des valeurs de viscosité très faibles.

Le document JP-A-57.174,328 (ASAHI CHEMICAL IND.) décrit le moulage du polyéthylène après l'avoir mélangé, à une tempé rature inférieure à sa température de fusion, avec 0,05 - 1 parties d'un pigment et 0,03 - 3 parties, d'un fluidisant fondant entre 30 et 110°C. A titre d'exemple, ce document cite un mélange contenant 1 partie de polyéthylène, 0,3 partie de $TiO_2$ et 0,1 partie de stéaramide, le tout fournissant par moulage des objets "améliorés", ce terme se rapportant à des caractéristiques telles que l'état de surface, la dispersion du pigment dans la masse et les propriétés mécaniques, tout ceci par rapport à des témoins sans stéaramide.

Malgré l'intérêt et les avantages des compositions connues de l'état de la technique et utilisant, pour le moulage d'objets, des mélanges à base de polyéthylène ou autres résines thermoplastiques plastifiées par des paraffines à point de fusion peu élevé, il était désirable de disposer de compositions permettant de mouler des objets de petite dimension, par exemple de 0,1 à 5 mm de dimension maximale hors-tout, par injection notamment, et contenant des taux relativement élevés de charges minérales, de l'ordre, par exemple, de 50 à 80% en poids par rapport au poids du total de la composition.

La composition de la présente invention, telle que définie à la revendication 1, permet de réaliser de tels objectifs.

Un des buts principaux d'application de la présente composition est le moulage d'objets très petits, notamment de signes en plastique devant être fixés sur un cadran de montre (lettres, chiffres, signes distinctifs, etc...). A ce sujet, on sait que la pose de signes lumineux sur un cadran de montre par les moyens habituels présente certaines difficultés. En effet, ces signes sont généralement constitués de petites masses d'une pâte qu'on prépare en mélangeant du sulfure de zinc, une résine polymère et un solvant de cette résine et qu'on dépose manuellement sur le cadran aux endroits requis. Certaines irrégularités, indésirables visuellement, (dans la quantité de matière utilisée et dans le positionnement des masses de celle-ci) peuvent se présenter et pour éliminer de tels inconvénients, on cherche à réaliser ces signes par des méthodes fournissant des formes parfaitement reproductibles, par exemple par thermoformage ou microinjection, les signes moulés étant ensuite fixés comme appliques sur le cadran de montre. Ces avantages sont encore plus marqués si on se réfère à des signes autoluminescents, c'est-à-dire contenant une proportion de matière radioactive qui est chère et qu'il importe non seulement d'économiser mais de ne pas disperser pour des raisons de sécurité. La composition de l'invention se prête bien à de telles applications.

On notera encore que la composition de l'invention permet d'effectuer des moulages à relativement basse température, sa viscosité entre environ 80 et 150°C, même pour des proportions de pigment allant de 50 à 80% en poids, étant suffisamment peu élevée pour autoriser l'injection sous des pressions de l'ordre de 400 à 1000 $N/cm^2$. Or, toujours dans le cas du moulage de signes autoluminescents, des températures de moulage ne dépassant pas 150°C (et de préférence de 80 à 140°C) sont extrêmement avantageuses car, alors la décomposition thermique et la perte d'activateur radioactif (le tritium par exemple) devient nulle. Un tel facteur se revèle extrêmement important industriellement en ce qui concerne le recyclage des chutes et rejets de moulage. On a constaté qu'en utilisant la présente composition, on pouvait recycler au moins 10 fois le même échantillon sans perte notable de son pouvoir lumineux et esthétique.

Comme résine thermoformable, on peut utiliser pour la composition suivant l'invention, des polyalcoylènes comme le polypropylène, le polystyrène et le polyéthylène. De préférence, on utilise le polyéthylène d'un poids moléculaire relativement élevé, par exemple entre 100.000 et 5.000.000 (polyéthylène haute-pression). Le point de ramolissement d'un tel polymère est généralement supérieur à 80 - 100°C et, pour le mouler sans plastifiant, il faut chauffer à des températures pouvant atteindre 180 - 220°C ou même plus, gamme qu'on cherche précisément à éviter comme indiqué plus haut.

Comme plastifiant, on utilise une cire, stéarine ou paraffine de structure chimique voisine de celle de la résine thermoplastique (F 80-95°C). Ainsi, dans le cas du polyéthylène, des paraffines commerciale (dérivées du prétrole) conviennent; on peut cependant si on le désire, utiliser des pro duits d'origine différente, notamment végétale, La quantité de paraffine par rapport à la résine est de l'ordre de 3 à 75% en poids. Ces limites sont dictées par les considérations suivantes: une quantité inférieure à 3% de plastifiant (par exemple 1%) pourrait convenir dans certains cas spéciaux; cependant, en général, avec d'aussi faibles proportions de paraffine, l'effet dissolvant sur la résine et l'abaissement de la température de moulage deviennent moins significatifs et, par ailleurs, le produit moulé pourrait se révéler cassant. De même, à l'autre extrémité de la plage considérée, de trop fortes proportions de plastifiant sont à déconseiller car, alors, la stabilité mécanique de l'objet moulé peut s'en ressentir. De manière générale, on préfère utiliser, comme phase organique, un mélange 1:30 à 1:2 de plastifiant et de résine, celle-ci étant simplement dissoute, par chauffage et agitation dans le plastifiant.

Il n'y a pas de limitation particulière en ce qui concerne la nature des pigments minéraux intervenant dans la présente composition. Dans l'application particulière sus-mentionnée, on a cité le ZnS; d'autres pigments luminescents ou non, tels que le silicate de Zn, BaTiO$_3$, le strontium tungstate, etc... peuvent aussi convenir. La quantité en poids de pigment par rapport au total de la composition peut atteindre: 80 à 90%. On notera qu'il est très important de pouvoir incorporer des proportions élevées de pigment à la résine car, dans le cas où on utilise du ZnS comme agent luminescent, l'effet de celui-ci est insuffisante au-dessous de 40%. Il est évident que plus la proportion de plastifiant dans la composition est grande, plus est élevée la proportion admissible de pigment pour une viscosité donnée à une certaine température. L'homme de métier peut donc facilement, dans certains cas spéciaux, augmenter la proportion de pigment aux dépends ce celle de la résine thermoformable, ou vice-versa. Les proportions sont alors à adapter en fonction des besoins auxquels doivent satisfaire les objets moulés.

Comme déjà dit, une des applications principales de la présente composition est représentée par la fabrication de signes autoluminescents pour cadrans de montres. Suivant cette application, on prépare à chaud une dissolution de la résine dans le plastifiant liquide et, dans cette solution, on disperse la quantité voulue de pigment, celui-ci présentant une granulométrie très fine, de l'ordre de 0,1 à 50μm. Le pigment peut être accompagné d'un activateur de fluorescence, par exemple un polymère contenant un émetteur β tel que le tritium. De tels produits sont disponibles commercialement.

La composition est alors moulée, par exemple par injection, la température d'injection étant comprise entre 80 et 150°C, de préférence, entre, 100 et 120°C pour éviter toute décomposition thermique. Lorsque les objets moulés sont destinés à être appliqués sur des cadrans, ils comportent, à l'envers de leur base, des pattes de fixation venues de moulage, ces pattes permettant d'orienter très exactement les signes sur le cadran grâce à des trous correspondants que comporte celui-ci et à travers lesquels passent ces pattes qui sont ensuite scellées par la chaleur. Ces techniques de fixation d'appliques sur les cadrans sont, en soi, parfaitement connues en horlogerie.

Les exemples qui suivent illustrent l'invention.

Exemple 1

On a placé dans un malaxeur-homogénéiseur chauffable 270 g de polyéthylène 1591 (PE) (poids moléculaire en nombre ($\overline{M}_n$) osmométrique 65, poids moléculaire en poids ($\overline{M}_w$) viscométrique 19000. Point de ramollissement Vicat (VSP) ASTM D 1525-70 T 100-103°C) en granules, 30 g de paraffine (PF) et 700 g de sulfure de zinc radioactif (ZnS). On a chauffé à 120°C et malaxé le tout 1 h de manière à réaliser une composition homogène. .

Après refroidissement, on a fragmenté la masse en particules qui, en majorité, avaient des dimensions de l'ordre de 1 à 3 mm. On a placé ces particules dans la chambre d'une machine à mouler par injection et on a procédé au moulage, par injection à 120°C, de signes à appliquer sur un cadran de montre. Ces signes se présentaient sous forme de plots en forme de demi-sphère d'environ 0,8 mm de coté. Ces signes présentaient une excellente résistance mécanique, même à chaud, et, une fois appliqué à un cadran de montre donnaient à celui-ci un aspect très régulier.

A titre comparatif, on a préparé une composition de contrôle sans paraffine; on n'a cependant pu homogénéiser celle-ci qu'à des températures dépassant 200°C et, pour fabriquer, des signes par injection, il a fallu procéder à 260°C, température à laquelle le sulfure de zinc radioactif se décompose.

Exemple 2

On a procédé comme décrit à l'Exemple précédent et préparé une composition thermoinjectable à 120°C comprenant en poids 75% de ZnS radioactivé par une résine polystyrénique tritiée, 12,5% de polyethylène haute pression et 12,5% de paraffine F.40°C. Après avoir moulé par injection à 120°C, comme décrit à l'Exemple 1, des cylindres d'un diamètre de 10mm et de 15 mm de haut, on a maintenu ceux-ci à 90° pendant 1 nuit sans constater de modification de forme. Par contre, un ramollissement intervient à partir de 100 - 110°C.

Exemple 3

On a étudié les propriété à la chaleur de cylindres moulés par injection (voir l'Exemple 2) et réalisés à partir d'une composition (en parties en poids) telle que celle de l'exemple 1: PE27/PF3/ZnS70(1); on a procédé de même avec une composition de contrôle PE30/ZnS70 moulée à 220°C (C) et avec la composition de l'Exemple 2 PE12,5/PF12,5/ZnS75 (2).

Les divers cylindres obtenus ont été chauffés 1 h à des températures différentes indiquées dans le tableau qui suit. Au-dessus d'une certaine température, les cylindres se sont ramollis et étalés sous forme de dépôts circulaires dont le diamètre est en raison inverse de la viscosité a la température considérée. Les résultats figurent ci-dessous.

| Température | Diamètre des dépôts (mm) | | |
|---|---|---|---|
| | (C) | (1) | (2) |
| 80 | - | - | - |
| 90 | - | - | - |
| 100 | - | - | ramoll. |
| 110 | - | ramoll. | 40 |
| 115 | ramoll. | 27 | 40 |
| 125 | 25 | 30 | 45 |
| 135 | 27 | 32 | 50 |
| 140 | 30 | 35 | 50 |

On constate, d'après les résultats ci-dessus (et c'est là un critère d'injectabilité à 120°C que la viscosité d'une composition conforme à l'invention doit être suffisament basse (c'est-à-dire la composition suffisament fluide) pour qu'après 1h à 125°, une masse d'un volume de 1,77cm$^3$ s'étale sous forme d'un dépôt circulaire d'un diamètre d'au moins 30 mm.

**Revendications**

1. Composition thermoformable à base de matière minérale et thermoplastique contenant une résine thermoformable, un plastifiant constitué d'une cire ou paraffine hydrocarbonée de point de fusion peu élevé et une proportion d'au moins 40% en poids de pigments minéraux, cette composition étant destinée au moulage précis d'objets de dimensions réduites, notamment de dimensions hors-tout d'environ 100 µm à 5 mm, caractérisée en ce qu'elle est constituée d'une dispersion homogène du pigment dans une solution de la résine dans le plastifiant, que le point de fusion du plastifiant est de 40 à 95°C, que la proportion de ce plastifiant par rapport à la résine est de 3 à 75% et que sa viscosité à la température de moulage est de 100 à 50000 centistokes.

2. Composition suivant la revendication 1, caractérisée en ce que le thermoplastique est en polyétylène haute pression.

3. Composition suivant la revendication 1, caractérisée en ce que les pigments minéraux sont choisis parmi ZnS, SrS, BaTiO$_3$, SrWO$_4$ et le silicate de Zn.

4. Composition suivant la revendication 1, caractérisée en ce que ces pigments sont auto-luminescants, l'activation lumineuse étant fournie par une substance radioactive.

5. Composition suivant la revendication 1, caractérisée en ce que la proportion de pigments minéraux atteint 80 à 90% en poids de la composition.

6. Composition suivant la revendication 1, caractérisée en ce que sa température de moulage est de 80 à 150°C.

7. Composition suivant la revendication 1, caractérisée en ce que sa pression de moulage est de 40 à 100 kg/cm$^2$.

8. Composition suivant la revendication 1, caractérisée en ce que le plastifiant est une paraffine.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 093 456 (KOLLMER)<br>* Revendications 1-4 *<br>--- | 1-8 | C 08 K    3/30<br>C 08 L   91/06<br>C 08 L   23/02<br>C 08 L  101/00 |
| X | US-A-3 462 389 (SCHULDE et al.)<br>* Colonne 1, ligne 31 - colonne 2, ligne 58 *<br>--- | 1-8 | |
| X | FR-E-   91 754 (W.R. GRACE & CO.)<br>* En entier *<br>----- | 1-8 | |

**DOMAINES TECHNIQUES RECHERCHES (Int. Cl.4)**

C 08 K
C 08 L

Le présent rapport a été établi pour toutes les revendications

| Lieu de la recherche | Date d'achèvement de la recherche | Examinateur |
|---|---|---|
| LA HAYE | 01-03-1989 | GOOVAERTS R.E. |